# FASCICULE DE BREVET EUROPEEN

(11) **EP 1 434 038 B1**
(45) Date de publication et mention de la délivrance du brevet: **14.05.2014**
(21) Numéro de dépôt: 03300276.7
(22) Date de dépôt: 22.12.2003
(51) Int. Cl.: G01F 15/00, G01F 15/18

(54) **Dispositif de détection du positionnement d'un module de mesure sur un compteur de fluide**
Vorrichtung zur Detektion der Lage eines Messmoduls auf einem Fluidzähler
Detection device of the position of a measurement module on a fluid meter

(30) Priorité: 23.12.2002 FR 0216489
(43) Date de publication de la demande: 30.06.2004
(73) Titulaire: Itron France, 92130 Issy les Moulinaux (FR)
(72) Inventeur: Demia, Laurent, 01120 Montluel (FR); Bulteau, Serge, 69840 Juliénas (FR); Cros, Alain, 71680 Creches sur Saone (FR); Benoit, Luc, 01750 Replonges (FR)
(74) Mandataire: Howson, Richard G.B.

(56) Documents cités:
- EP-A- 1 033 578
- US-A- 6 098 456

## Description

L'invention se rapporte à un dispositif de détection du positionnement d'un module de mesure sur un compteur de fluide, en particulier d'eau.

Il est connu d'associer à un compteur de fluide un module de mesure disposé sur le compteur et destiné à permettre le relevé à distance de la consommation de ce compteur. Cette mesure peut être par exemple optique, capacitive, magnétique ou inductive. Le compteur comporte en général un indicateur de consommation visible formé d'un disque indicateur rotatif, dont la rotation est détectée par le module et le signal reçu par le module est traité pour déduire le nombre de tours du disque et éventuellement son sens de rotation.

Pour permettre correctement cette détection, le module doit être correctement positionné sur la face du compteur où ce disque est disposé, afin que les moyens de détection du module soient en général en vis à vis de ce disque ou tout au moins aient une position relative précise avec ce disque.

De plus, il est important de détecter tout arrachement ou soulèvement frauduleux de ce module.

Il est connu de réaliser un tel dispositif de détection au moyen d'un élément mécanique de type bouton poussoir.

Un tel dispositif est difficilement ajustable quant à la course de détection, nécessite un agencement d'étanchéité spécifique et de fabrication relativement complexe est coûteux.

L'invention résout ces problèmes techniques en proposant un dispositif de détection du positionnement fiable et peu encombrant.

Pour ce faire, l'invention propose un dispositif de détection du positionnement d'un module de mesure à distance disposé sur un compteur de fluide, une paroi de ce module étant disposée sur une paroi du compteur, caractérisé en ce qu'il comprend au moins un premier élément électriquement conducteur fixé sur une partie liée au compteur et au moins deux seconds éléments électriquement conducteurs fixés au module, disposés en vis à vis du premier élément, lorsque le module est correctement disposé sur le compteur, et connectés électriquement à une carte électronique, l'un des seconds éléments étant une électrode émettrice de tension et l'autre des seconds éléments étant une électrode réceptrice de tension.

Selon un premier mode de réalisation préféré, le premier élément est fixé sur ladite paroi du compteur à l'intérieur de celui-ci.

Selon un second mode de réalisation préféré, le compteur comportant un indicateur de consommation mobile, le premier élément est fixé sur la face de cet indicateur tournée vers le module.

Avantageusement, les seconds éléments sont intégrés à la carte électronique.

Les éléments électriquement conducteurs peuvent être des revêtements métalliques ou des étiquettes auto-collantes.

De préférence, le dispositif comporte un système d'alarme mis en fonctionnement en cas de variation de la capacité du condensateur formé par les éléments électriquement conducteurs.

Le système d'alarme peut être mis en fonction lorsque la capacité est différente d'une valeur seuil et peut actionner un signal lumineux.

L'invention concerne également un compteur de fluide comportant un premier élément électriquement conducteur partie d'un dispositif de détection de positionnement tel que précisé ci-dessus.

L'invention concerne enfin un module de détection destiné à coopérer avec un compteur de fluide et comportant des seconds éléments électriquement conducteurs parties d'un dispositif de détection du positionnement tel que précisé ci-dessus.

L'invention est décrite ci-après plus en détail à l'aide de figures ne représentant que des modes de réalisation préférés de l'invention.

La figure 1 est une vue de face d'un compteur et d'un module de mesure conformes à l'invention.

La figure 2 est une vue en coupe d'un dispositif de détection de positionnement conforme à l'invention selon un premier mode de réalisation.

Les figures 3A et 3B sont une vue de face d'une partie du dispositif de détection et une vue de face d'une autre partie du dispositif de détection, selon un premier exemple de réalisation.

Les figures 4A et 4B sont une vue de face d'une partie du dispositif de détection et une vue de face d'une autre partie du dispositif de détection, selon un second exemple de réalisation.

La figure 5 est une vue en coupe d'un dispositif de détection de positionnement conforme à l'invention selon un second mode de réalisation.

Les figures 6A et 6B sont une vue de face d'une partie du dispositif de détection et une vue de face d'une autre partie du dispositif de détection, selon un autre exemple de réalisation.

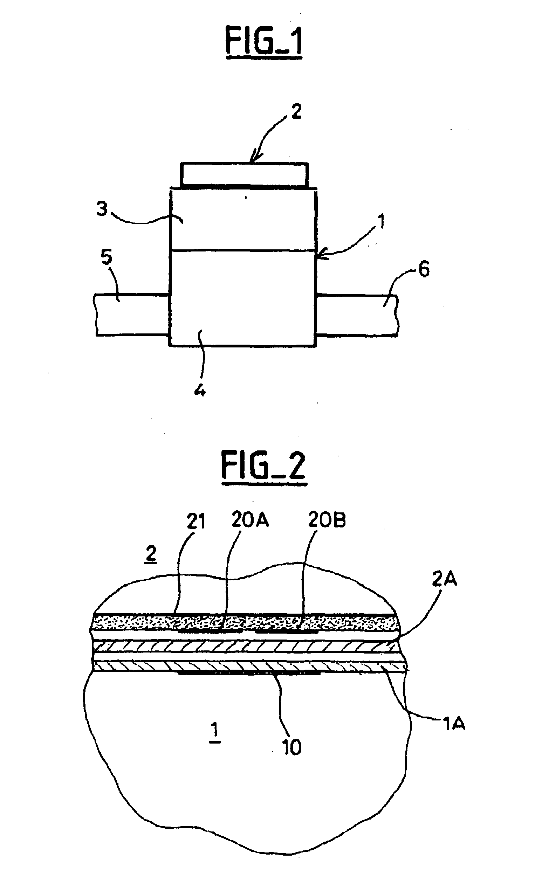

Sur la figure 1 sont représentés schématiquement un compteur de fluide 1, plus précisément d'eau, équipé d'un module de mesure 2 sur sa face supérieure. Le compteur 1 comporte une bâche 1 pourvue d'une canalisation d'entrée 5 et d'une canalisation de sortie 6 et recevant un moyen de mesure tel qu'une chambre de mesure volumétrique ou un système de turbine, et un totaliseur 3 comportant les moyens de comptage de la consommation.

Le module 2 permet de détecter ou de relever par voie électronique, le mouvement de rotation d'une pièce rotative tournant avec une vitesse de rotation proportionnelle à la consommation. Ensuite, ce mouvement de rotation peut être traité ou exp loité et cumulé de manière électronique, et la consommation cumulée ainsi que d'autres informations peuvent être transmises par l'intermédiaire d'un système de communication optique ou électronique, en vue de la facturation, d'un contrôle ou d'une commande.

La figure 2 représente partiellement l'interface entre le compteur 1 et le module 2, la paroi 2A du module étant disposée sur la paroi 1A du compteur et plus précisément du totaliseur.

Le dispositif de détection du positionnement du module de mesure à distance 1 comprend un premier élément électriquement conducteur 10 fixé sur une partie liée au compteur, ici collé sur la face interne de sa paroi 1A, et deux seconds éléments 20A, 20B électriquement conducteurs fixés au module et disposés en vis à vis du premier élément, lorsque le module 2 est correctement disposé sur le compteur 1. Ces éléments électriquement conducteurs forment un capteur capacitif.

Les seconds éléments 20A, 20B sont connectés électriquement à une carte électronique 21, de préférence intégrés à cette carte électronique.

Avantageusement, les éléments électriquement conducteurs peuvent être des revêtements métalliques.

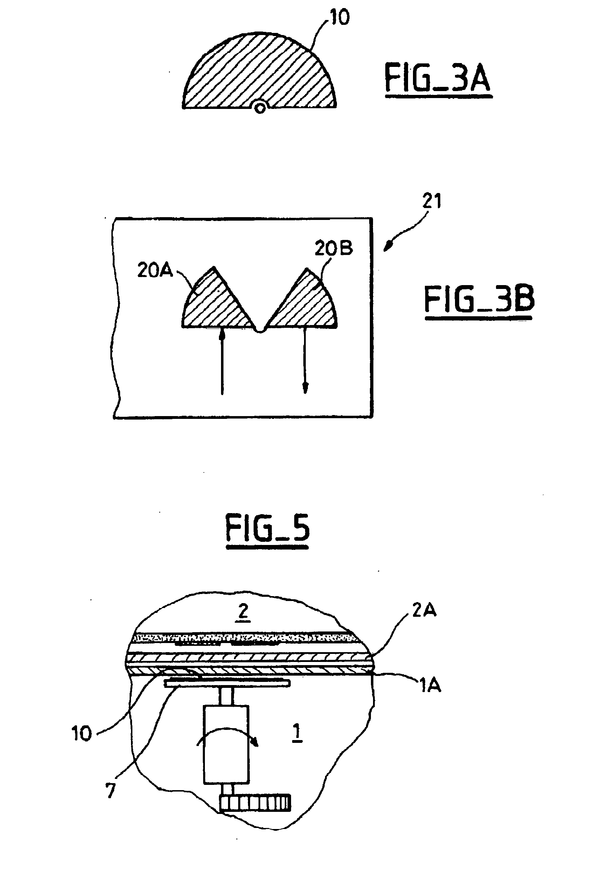

Un exemple de réalisation de ces éléments électriquement conducteurs est représenté sur les figures 3A et 3B.

L'élément électriquement conducteur 10 est une surface en un matériau électriquement conducteur, par exemple sous la forme d'une métallisation. Cette surface possède la forme d'un secteur circulaire et s'étend dans l'exemple de réalisation montré, sur 180°.

Cette surface 10 coopère avec les deux éléments électriquement conducteurs 20A, 20B formés de deux électrodes prévues sur la plaque de circuit imprimé 21. Les électrodes 20A, 20B possèdent également la forme de secteurs circulaires, toutes les électrodes occupant dans l'exemple de réalisation montré, un secteur circulaire d'environ 50°. L'électrode 20A sert, dans l'exemple de réalisation montré, d'électrode d'excitation et l'électrode 20B d'électrode réceptrice, leur fonction étant décrite plus en détail dans la suite.

En position correcte du module sur le compteur, les électrodes 20A, 20B et l'élément électriquement conducteur 10 sont complètement en face les uns des autres. Il est ainsi formé un condensateur entre la surface 10 et l'électrode 20A, 20B. La surface 10 assure un couplage capacitif des deux électrodes 20A, 20B, ce qui conduit à ce que lors de l'application d'une impulsion de tension à l'électrode d'excitation 20A couplée capacitivement, il est possible de relever ou de prélever un signal de réception correspondant sur l'électrode réceptrice 20B, ce signal correspondant à une valeur seuil et à l'état « position correcte ».

Si le positionnement est modifié, le signal reçu est différent au signal précédent et l'on peut en déduire un état « position incorrecte ».

Il est bien sûr possible de positionner différemment les éléments électriquement conducteurs et de choisir en tant que valeur seuil la capacité correspondante à toute autre position relative des éléments électriquement conducteurs 10, 20A, 20B.

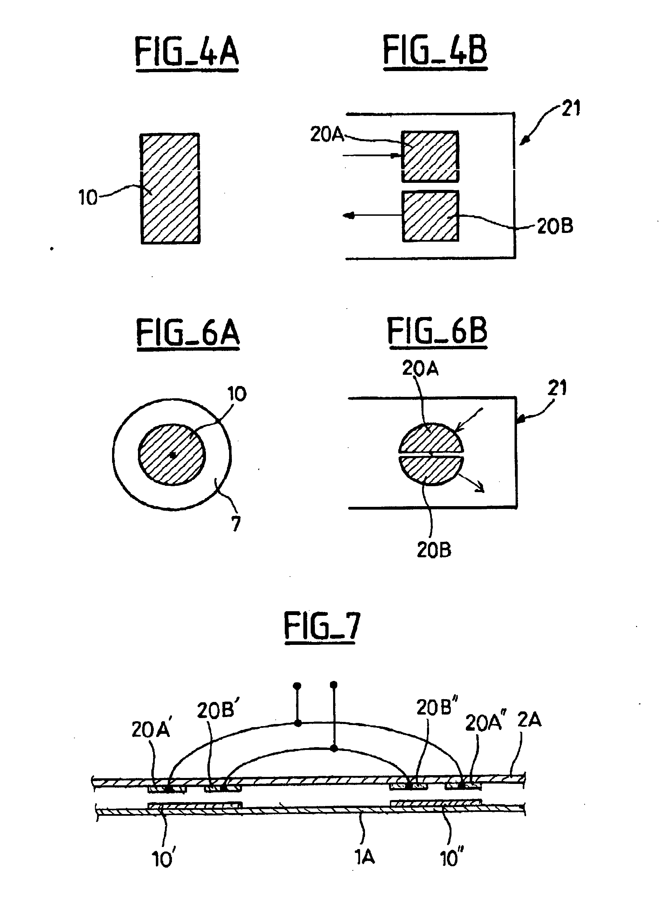

Les figures 4A et 4B représentent un autre exemple de réalisation présentant l'avantage d'être plus optimisé en terme d'encombrement par rapport au signal reçu.

L'élément électriquement conducteur 10 est une surface en un matériau électriquement conducteur, par exemple sous la forme d'une métallisation. Cette surface 10 possède la forme d'un rectangle et coopère avec les deux éléments électriquement conducteurs 20A, 20B formés de deux électrodes prévues sur la plaque de circuit imprimé 21. Les électrodes 20A, 20B possèdent également la forme de rectangle. L'électrode 20A sert, dans l'exemple de réalisation montré, d'électrode d'excitation et l'électrode 20B d'électrode réceptrice.

En position correcte du module sur le compteur, les électrodes 20A, 20B et l'élément électriquement conducteur 10 sont complètement en face les uns des autres.

A part leur forme, le fonctionnement de ce deuxième exemple est identique au premier exemple précédemment décrit.

Les moyens de traitement électroniques, qui englobent entre autres des moyens de production de tension, des moyens d'amplification, des portes logiques ou autre micro-processeurs, sont à la portée de l'homme du métier et ne sont pas décrits ici plus précisément.

La figure 5 illustre un second mode de réalisation.

Une partie des moyens de comptage du totaliseur 3 sont ici représentés. Ils comprennent un engrenage permettant l'entraînement en rotation d'une cible 7 ou indicateur de consommation mobile qui se situe à proximité de la paroi 1A du totaliseur 3. Cette paroi 1A peut être transparente et permettre la visibilité de cette cible tournante si nécessaire pour des raisons comme la lisibilité d'un index ou utile pour un principe de détection de rotation.

L'élément électriquement conducteur 10 est disposé sur la face de la cible tournée vers cette paroi 1A et du côté module, sont disposés les éléments électriquement conducteurs 20A, 20B.

Dans ce mode de réalisation, l'élément électriquement conducteur 10 peut être également utilisé pour détecter la rotation de la cible par des moyens optiques, capacitif, inductif ou magnétique par exemple, en plus de sa fonction de détection du positionnement.

Les éléments électriquement conducteurs 10, 20A, 20B sont alors conformés de telle sorte qu'ils soient en vis à vis au moins partiellement sur toute la rotation de la cible 7.

Les figures 6A et 6B représentent un exemple de réalisation destiné à ce dernier mode de réalisation.

L'élément électriquement conducteur 10 est une surface en un matériau électriquement conducteur, par exemple sous la forme d'une métallisation. Cette surface 10 possède la forme d'un cercle centré sur l'axe de rotation de la cible 7. Il coopère avec les deux éléments électriquement conducteurs 20A, 20B formés de deux électrodes prévues sur la plaque de circuit imprimé 21. Les électrodes 20A, 20B possèdent la forme de demi-cercles. L'électrode 20A sert, dans l'exemple de réalisation montré, d'électrode d'excitation et l'électrode 20B d'électrode réceptrice.

En position correcte du module sur le compteur, les électrodes 20A, 20B et l'élément électriquement conducteur 10 sont complètement en face les uns des autres.

A part leur forme, le fonctionnement de cet exemple est identique aux exemples précédemment décrits.

Le dispositif comporte un système d'alarme mis en fonctionnement en cas de variation de la capacité du condensateur formé par les éléments électriquement conducteurs.

Le système d'alarme peut être mis en fonction lorsque la capacité est différente de la valeur seuil ou d'une plage de valeurs fixée. Ce positionnement de l'alarme peut aussi se faire sur la dérivée de la capacité par rapport au temps qui doit rester dans une certaine plage. Est alors intégrée automatiquement à la dérivée la notion de temps.

Ce système d'alarme peut être appliqué de différentes façons.

Lors de l'installation du module de mesure 2, l'opérateur peut s'assurer du bon positionnement de ce module, ceci avec ou sans circulation d'eau. Le capteur capacitif peut être arrêté juste après positionnement du module ou après un laps de temps déterminé.

Pendant la vie du produit, l'alarme peut être sauvegardée et être lue lors d'une prochaine télémesure de la consommation. Ainsi, le releveur peut détecter un arrachement, une fraude ou une tentative de fraude.

Cette alarme peut être l'arrêt du système de comptage ou un signal lumineux émis de façon continue ou intermittente et provenant du module de mesure ou du compteur de fluide. Ce signal peut être émis lors de l'installation du module ou en utilisation. Une couleur différente du signal peut différencier la position correcte et la position incorrecte ou tentative de fraude.

Plusieurs dispositifs de détection tels que précédemment décrit peuvent être associés et reliés en parallèle, afin d'augmenter la surface de détection et donc la zone sensible au soulèvement et le signal.

Une telle association est schématisée sur la figure 7. Sur la paroi 1A du compteur sont fixés deux éléments conducteurs 10', 10" et respectivement en vis-à-vis sur la paroi 2A deux couples d'électrodes, les électrodes d'excitation 20A' et 20A" étant connectées l'une à l'autre et les électrodes réceptrices 2B' et 20B" étant connectées l'une à l'autre. Cet agencement est équivalent à deux condensateurs mis en parallèle.

## Revendications

1. Dispositif de détection du positionnement d'un module de mesure (2) à distance disposé sur un compteur de fluide (1), une paroi (2A) liée à ce module étant disposée à proximité d'une paroi liée au compteur (1A), **caractérisé en ce qu'**il comprend au moins un premier élément électriquement conducteur (10) fixé sur ladite paroi (1A) du compteur (1) et au moins deux seconds éléments électriquement conducteurs (20A, 20B) fixés à ladite paroi (2A) du module (2), disposés en vis à vis du premier élément (10), lorsque le module est correctement disposé sur le compteur, et connectés électriquement à une carte électronique (21), l'un des seconds éléments (20A) étant une électrode émettrice de tension et l'autre des seconds éléments (20B) étant une électrode réceptrice de tension et des moyens pour relever un signal de réception correspondant sur ladite électrode réceptrice (20B), ce signal correspondant à un état « position correcte » ou « position incorrecte ».

2. Dispositif selon la revendication 1, **caractérisé en ce que** ledit premier élément (10) est fixé sur ladite paroi du compteur à l'intérieur de celui-ci.

3. Dispositif selon la revendication 1, le compteur comportant un indicateur de consommation mobile (7), **caractérisé en ce que** ledit premier élément (10) est fixé sur la face de cet indicateur tournée vers le module.

4. Dispositif selon l'une quelconque des revendications précédentes, **caractérisé en ce que** lesdits seconds éléments (20A, 20B) sont intégrés à ladite carte électronique (21).

5. Dispositif selon l'une quelconque des revendications précédentes, **caractérisé en ce que** lesdits éléments électriquement conducteurs (10, 20A, 20B) sont des revêtements métalliques.

6. Dispositif selon l'une quelconque des revendications précédentes, **caractérisé en ce qu'**il comporte un système d'alarme mis en fonctionnement en cas de variation de la capacité du condensateur formé par lesdits éléments électriquement conducteurs

7. Dispositif selon la revendication 6, **caractérisé en ce que** le système d'alarme est mis en fonction lorsque la capacité est différente d'une valeur seuil.

8. Dispositif selon l'une quelconque des revendications précédentes, **caractérisé en ce que** ledit système d'alarme actionné un signal lumineux.

9. Compteur de fluide **caracterisé en ce qu'**il comporte un premier élément électriquement conducteur (10) partie d'un dispositif de détection de positionnement selon l'une des revendications précédentes.

10. Module de détection destiné à coopérer avec un compteur de fluide **caracterisé en ce qu'**il comporte desdits seconds éléments électriquement conducteurs (20A, 20B) parties d'un dispositif de détection du positionnement selon l'une des revendications 1 à 8.

## Patentansprüche

1. Vorrichtung zur Detektion der Position eines an einem Fluidzähler (1) angeordneten Fernmessmoduls (2), wobei eine mit diesem Modul verbundene Wand (2A) in der Nähe einer mit einem Rechner (1A) verbundenen Wand angeordnet ist, **dadurch gekennzeichnet, dass** sie mindestens ein erstes elektrisch leitendes Element (10), welches an der Wand (1A) des Zählers (1) befestigt ist, und mindestens zwei zweite elektrisch leitende Elemente (20A, 20B) aufweist, welche bei korrekt am Computer angeordnetem Modul gegenüber dem ersten Element (10) an der Wand (2A) des Moduls (2) befestigt und elektrisch mit einer elektronischen Karte (21) verbunden sind, wobei eines (20A) der zweiten Elemente eine Spannungssendeelektrode und das andere (20B) der zweiten Elemente eine Spannungsempfangselektrode ist, und Mittel zum Aufnehmen eines entsprechenden Empfangssignals an der Empfangselektrode (20B), welches Signal dem Zustand einer "korrekten Position" bzw. einer "nicht korrekten Position" entspricht.

2. Vorrichtung nach Anspruch 1, **dadurch gekennzeichnet, dass** das erste Element (10) an der Wand des Rechners im Inneren desselben befestigt ist.

3. Vorrichtung nach Anspruch 1, wobei der Rechner einen mobilen Verbrauchsanzeiger (7) aufweist, **dadurch gekennzeichnet, dass** das erste Element (10) an der zum Modul gerichteten Seite dieses Anzeigers befestigt ist.

4. Vorrichtung nach einem der vorhergehenden Ansprüche, **dadurch gekennzeichnet, dass** die zweiten Elemente (20A, 20B) in der elektronischen Karte (21) integriert sind.

5. Vorrichtung nach einem der vorhergehenden Ansprüche, **dadurch gekennzeichnet, dass** die elektrisch leitenden Elemente (10, 20A, 20B) Metallbeschichtungen sind.

6. Vorrichtung nach einem der vorhergehenden Ansprüche, **dadurch gekennzeichnet, dass** sie ein Alarmsystem aufweist, das bei einer Veränderung der Kapazität des durch die elektrisch leitenden Elemente gebildeten Kondensators ausgelöst wird.

7. Vorrichtung nach Anspruch 6, **dadurch gekennzeichnet, dass** das Alarmsystem ausgelöst wird, wenn sich die Kapazität um einen Schwellenwert verändert.

8. Vorrichtung nach einem der vorhergehenden Ansprüche, **dadurch gekennzeichnet, dass** das Alarmsystem ein Lichtsignal betätigt.

9. Fluidzähler, **dadurch gekennzeichnet, dass** er ein erstes elektrisch leitendes Element (10) aufweist, welches Teil einer Positionsdetektionsvorrichtung nach einem der vorhergehenden Ansprüche ist.

10. Detektionsmodul zur Zusammenwirkung mit einem Fluidzähler, **dadurch gekennzeichnet, dass** es zweite elektrisch leitende Elemente (20A, 20B) aufweist, die Teil einer Positionsdetektionsvorrichtung nach einem der Ansprüche 1 bis 8 sind.

## Claims

1. Device for detecting the position of a remote measurement module (2) disposed on a fluid meter (1), a first wall (2A) associated with this module being disposed close to a wall associated with the meter (1A), **characterised in that** it comprises at least one first electrically conductive element (10) fixed to said wall (1A) of the meter (1) and at least two second electrically conductive elements (20A, 20B) fixed to said wall (2A) of the module (2), disposed facing the first element (10), when the module is correctly disposed on the meter, and connected electrically to an electronics card (21), one of the second elements (20A) being a voltage-emitter electrode and the other of the second elements (20B) being a voltage-receiver electrode and means for detecting a corresponding reception signal on said receiver electrode (20B), this signal corresponding to a status "position correct" or "position incorrect".

2. Device as claimed in Claim 1, **characterised in that** said first element (10) is fixed on said first wall of the meter inside the latter.

3. Device as claimed in Claim 1, wherein the meter includes a moving consumption indicator (7), **characterised in that** said first element (10) is fixed on the face of this indicator turned towards the module.

4. Device as claimed in any one of the preceding claims, **characterised in that** said second elements (20A, 20B) are integrated in said electronics card (21).

5. Device as claimed in any one of the preceding claims, **characterised in that** said electrically conductive elements (10, 20A, 20B) are metal coatings.

6. Device as claimed in any one of the preceding claims, **characterised in that** it includes an alarm system put into operation in the event of any variation in the capacitance of the capacitor formed by said electrically conductive elements.

7. Device as claimed in Claim 6, **characterised in that** the alarm system is put into operation when the capacitance is different from a threshold value.

8. Device as claimed in any one of the preceding claims, **characterised in that** said alarm system actuates a light signal.

9. Fluid meter, **characterised in that** it includes a first electrically conductive element (10) forming part of a device for detecting the position as claimed in any one of the preceding claims.

10. Detection module intended for co-operating with a fluid meter, **characterised in that** it includes said second electrically conductive elements (20A, 20B) forming part of a device for detecting the position as claimed in any one of Claims 1 to 8.
